# EUROPEAN PATENT APPLICATION

(11) **EP 1 075 066 A1**
(43) Date of publication of application: **07.02.2001**
(21) Application number: 99115382.6
(22) Date of filing: 04.08.1999
(51) Int. Cl.: H02G 3/00

(54) **Serializable power receiver/supply unit**

(71) Applicant: All-Line Inc., Taipei (TW)
(72) Inventor: Stekelenburg, Albert, Taipei (TW)
(74) Representative: LOUIS, PÖHLAU, LOHRENTZ & SEGETH

(57) **Abstract**

A serializable power receiver/supply unit consists of a body, terminals, wiring and at least one active component. A male terminal is provided on one side of the body, a female terminal, which can correspondingly be inserted into the male terminal, is provided on the other side of the body. There are lines and the connecting components in the body. Its one end can be used as power receiver for an acting component and the other end can be used as power supply to another unit. The active component can be a socket, a timer, a surge protector device or an illuminator. The connection of said male terminal and female terminal with the wiring is through the end seat of the male terminal and the female termimal, resp., into which the wiring terminal is inserted. The female terminal has an end sleeve with a sleeve hole in its center. The male terminal is provided with an end pin which can be inserted into the end sleeve.

## Description

The present invention relates to a serializable power receiver/supply unit, such unit belonging to the field of line connectors.

Electricity has been utilized by people for a long history, because it makes people's life very convenient and fast, therefore, up to date, balancing the degree of economic development or enhancement is usually the popularity of the power supply as one of the indexes.

The relative products or electric appliances are developed increasingly by the manufacturer due to utilization of electricity. For the present life circumstances, whether it is residence or office, the utilized electric appliances are various in kind and there is a tendency to increase the number day by day. Because driving and acting of electric appliances is dependent on electricity, it is unavoidable that the necessary power receiver devices should be available.

The present power receiver is a main output of the power supply at the socket, and the inserted holes are preset. On the other hand the electric appliances are provided with respective plug-installations, so that the current can pass through the appliance when the plug is selectively inserted into the socket. Therefore, for adapting to the case of multiplug, the number of the insert-hole groups in the socket is increased from single to multiple. Such units are called "extension line" if the connection is through an extra wiring.

Some extension lines are as an extra provided with necessary electric appliance elements such as timer, surge protector device and so on, which is developed from only the insert-hole according to the required functions of the electric appliance. Although such variation can save the trouble of individual installation, the defect is that it is impossible to select and the installed element will lie idle during the time when there is no necessity for its use. As another example the whole socket-set should be put away if the surge protector device etc. are damaged, which forms obviously waste.

The object of the present invention is to provide a serializable power receiver/supply unit and make which can overcome the defects of the prior art. The other units are also serializable to act if one of the units is damaged or not in use, which can then be put aside. The various components can also be of a modular design.

The technical measures embodying above-mentioned object of the present invention are as follows:
The serializable receiver/supply unit consists of a body, terminals, wirings and components (to be used or connected), wherein the male terminals are provided at one side of the body, the female terminals, which can correspondingly be inserted into said male terminals, and there are lines and wirings connected with the components provided within the body. One end of the body can be used as power receiver for energizing the component and the other end can be used as power supply for another unit. Said components can be a socket, a timer, a surge protector device or an illuminator. For connecting said male terminal and female terminal with the wirings, terminals provided at the wiring ends are inserted into the end seats of the male terminal and female terminal, respectively. The female terminals are provided with an end sleeve and have in the center a sleeve hole. The male terminals are provided with an end pin which can correspondingly be inserted into the end sleeve.

The serializable power receiver/supply unit of the present invention will now be described in detail with reference to the embodiment shown in the drawings, wherein -:
- Figure 1: is an exploded view showing the serializable power receiver/supply unit of the present invention when used for a multiple-hole socket,
- Figure 2: is a schematic view showing an assembled unit according to the present utility,
- Figure 3: is a sectional view showing a female terminal of the unit of the present invention,
- Figure 4: is a sectional view showing a male terminal of the unit of the present invention,
- Figure 5: is a schematic view showing a timer unit of the unit of the present invention,
- Figure 6: is a schematic view showing the unit of the present invention when used as surge protector device, and
- Figur 7: is a schematic view showing the unit of the present invention with various components in series.

As shown in the drawings, the inventive idea of the present invention is basically to be seen in that a terminal is respectively provided at both sides of each unit, wherein one side is the male terminal and another side is the female terminal, the components having the function such as a surge protector device, multiple-hole socket, timer, etc., being provided on a body between both terminals.

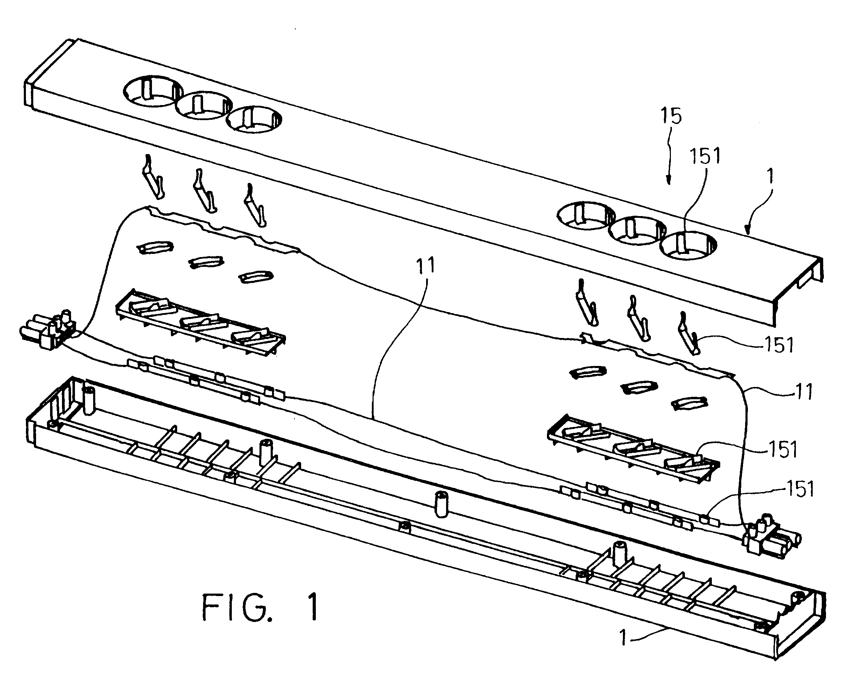

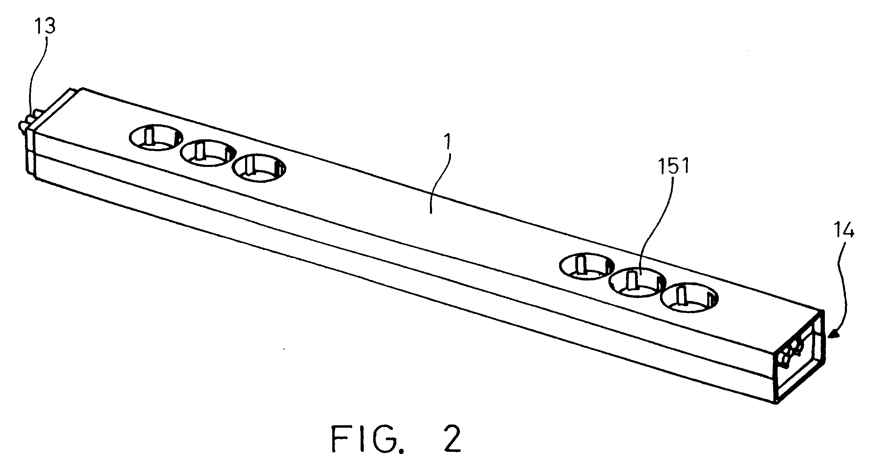

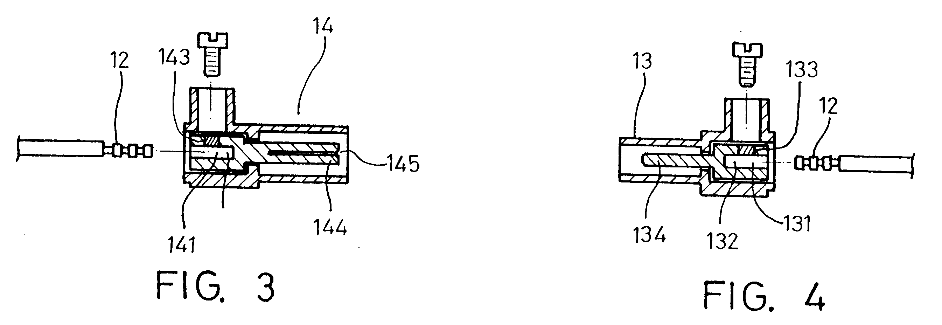

According to Figures 1 and 2, showing multiple-hole socket as an example, the wiring 11 for the current is provided in the body 1. As shown there are three wires, namely positive pole, negative pole and ground pole (this being not limiting). Wiring terminals 12 are provided at the ends of the wiring 11 (shown in Figures 3 and 4), which are inserted and connected to the male and female terminals.

At one external end of the wiring with the wiring terminals 12, a male terminal 13 is provided whereas on the other end a female terminal 14 is provided. In the male terminal and female terminal, resp., there are end seats 131, 141 consisting of a conducting metal. The internal diameter of the respective end holes 132, 142 corresponds to the diameter of the wiring terminals 12. For a permanent connection locking holes 133, 143 can be provided in the side walls of the end seats 131, 141, especially on the upper side of the male terminal 13 and female terminal 14, the end sets being fixed to the wiring by a screw.

The difference between the male terminal 13 and female terminal 14 is in that the free (other) end of the end seat 131 of the male terminal 13 is an end pin 134 in the form of an integral and extended bar, whereas the free end of the female terminal 14 is an end sleeve 144 which is integral extended and suitably formed. There is a sleeve hole 145 in the center of the end sleeve 144. Its internal diameter corresponds to that of said end pin 134. In addition an isolative material is provided between the several end pins 134 of a female terminal 14.

The utilized component 15 is provided in the line between a male terminal 13 and a female terminal 14 in the body 1 according to the various uses of the object. As shown in the embodiment of the present invention the component is a multiple-hole socket which has a socket element 151 forming the insert-hole arrangement. Such socket elements 151 consist from several parts (as can be seen in Figure 1), but are known and therefore not described in detail.

As shown in Figure 2, the unit of the present invention forms a bar-like body 1, which can be connected for use as power receiver on its ends. The male terminal 13 is on one side, the female terminal 14 is on the other side. Wiring 11 and wiring terminal 12 are within the body 1. Therefore the component 15 can be used or active when either the male terminal 13 or the female terminal 14 is connected to the power supply. The female terminal 14 or male terminal 13 on the other end can also be used as power receiver for another inserted unit.

In practise the design or shape of the male terminal 13 and female terminal 14 of the body 1 of the present invention vary. The corresponding relationship should be limited such that both sides (ends) can be inserted into each other. In addition the connection of the wiring terminal 12 with the male terminal 13 and the female terminal 14 can also be made using another equivalent form.

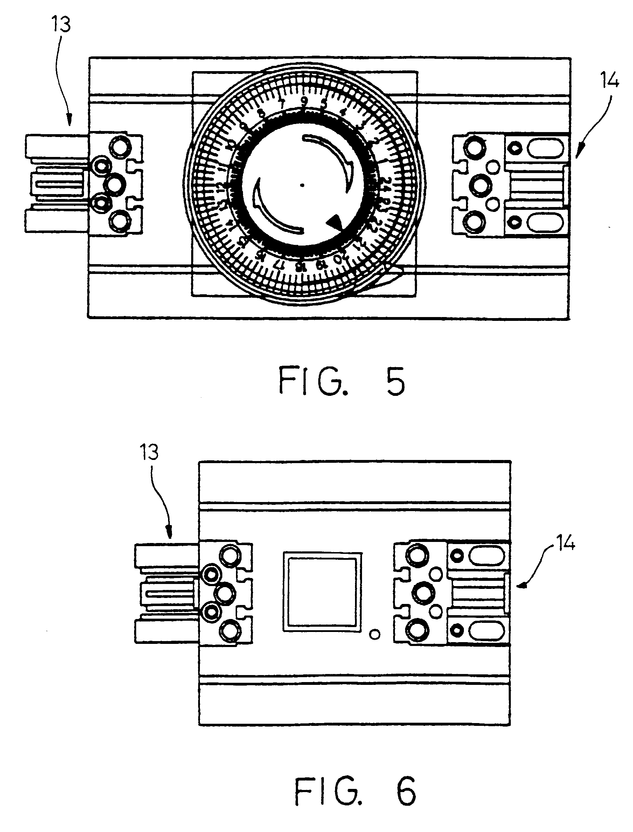

Figure 5 shows that for the unit of the present invention different components can be provided (according to the different functions which were described above). As shown in Figure 5 the active component unit can be a timer, which can be used as power receiver at one end and as power supply at the other end.

According to Figure 6 the active component unit is a surge protector device unit.

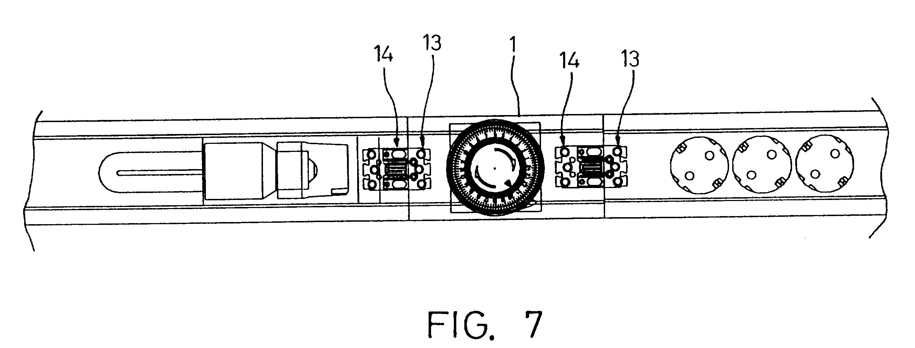

As shown in Figure 7 different active component units of the present invention can be used in series, such as an illuminator, a timer and a socket assembly. The unit can be used as power receiver at one and and as power supply at its other end.

Therefore, carrying out the present invention, there can be made selective combinations in series. The defect of wiring confusion found in the prior art where wiring must be connected to the external line, is avoided. If one of the units is damaged or is not in use, it can also be put aside, and the other units can still act in series. Compared to the concept of power receivers in the prior art, this is a breakthrough. In addition the various components can be formed into standardized designs which has never before been possible in articles of the present kind.

The present specification discloses only a preferred embodiment. Partial modifications or variations of the technical idea of the present invention, which are easily inferred by people skilled in the art, shall belong to the claimed scope of the present invention.

## Claims

1. A serializable power receiver/supply unit comprising a body (1), terminals (13, 14) and wirings (12)
**characterized in that**
a male terminal (13) is provided at one side end of the body (1), a female terminal (14), which can correspondingly be inserted into said male terminal (13) is provided at the other side end of the body (1) and that wirings (11) and at least one connecting component (15) are provided in the body (1), one end of the body (1) to be used as power receiver for the acting component (15) and the other end being usable as power supply to another unit.

2. Unit according to claim 1,
**characterized in that**
said component (15) is a socket.

3. Unit according to claim 1 or 2,
**characterized in that**
said component (15) is a timer.

4. Unit according to one of claims 1 to 3,
**characterized in that**
said component (15) is a surge protector device.

5. Unit according to any of claims 1 to 4,
**characterized in that**
said component (15) is a illuminator.

6. Unit according to any of claims 1 to 5,
**characterized in that**
the connection between said component (15) and the male terminal (13) and female terminal (14) by the wiring (12) is effected such that a wiring terminal (12) is inserted into a respective end seat (131, 141) of the male terminal (13) and female terminal (14), respectively.

7. Unit according to any of claims 1 to 6,
**characterized in that**
said female terminal (14) is provided with an end sleeve (144) having a sleeve hole (145) in its center, whereas the male terminal (13) is provided with an end pin (134) which can correspondingly be inserted into the end sleeve (144).
